Europäisches Patentamt

European Patent Office

Office européen des brevets

(19)

(11) Publication number: 0 299 655
A1

(12) # EUROPEAN PATENT APPLICATION

(21) Application number: 88306048.5

(22) Date of filing: 01.07.88

(51) Int. Cl.⁴ **H01F 7/18 , B60R 16/02**

(30) Priority: 03.07.87 GB 8715676

(43) Date of publication of application:
18.01.89 Bulletin 89/03

(84) Designated Contracting States:
AT BE DE ES FR GB IT NL SE

(71) Applicant: Norgren Martonair Limited
PO Box 22 Eastern Avenue
Lichfield Staffordshire, WS13 6SB(GB)

(72) Inventor: Page, Michael
2 Collinson Road Barton-under-Needwood
Burton-on-Trent Staffordshire(GB)

(74) Representative: Smith, Rex Clise et al
IMI plc, PO Box 216
Witton Birmingham B6 7BA(GB)

(54) **Electrical system and components therefor.**

(57) An addressable solenoid system comprising a pair of electrical leads having connected thereto a plurality of solenoids in parallel, a signal encoder adapted to superimpose a connected signal onto the power leads and signal decoders attached to each solenoid to decode the signals and operate the solenoid in accordance with instructions given via the signal coding system.

EP 0 299 655 A1

## Electrical System and Components Therefor

This invention relates to addressable solenoid systems.

An electrical solenoid essentially comprises an electrical coil containing a spool which spool is moved in accordance with the supply of a magnetic field generated by an electrical current passing through the solenoid.

Many systems utilise a plurality of solenoids. Initially, each solenoid was provided with a separate power supply and each solenoid was individually controlled by means of a power supply control system. However, the problem with such a system is that where there are large numbers of solenoids, say fifty or more, then it is necessary to provide fifty pairs of power cables, each connected individually to a solenoid.

In order to reduce the complexity of such systems, addressable solenoid systems have been produced in which there is a single pair of power leads and there are provided separate signal leads to control the supply of power from the power leads to each signal via individual relays. However, this system still requires 2n + 2 leads for n solenoids (2 power leads plus 2n control leads).

There has also been developed a system in which a pair of power lines are provided and a single pair of control lines have been provided with encoded signals imposed on the coded lines using serial RS232 standards. RS232 standards. are a conventional standard used in computer interfacing, but this system requires the user to write a program to permit a computer to control the solenoids and also requires four sets of electrical leads.

By the present invention there is provided an addressable solenoid system including

    i) A plurality of solenoids connected in parallel to

    ii) A pair of electrical supply leads,

    iii) A signal encoder adapted to superimpose at least one coded signal onto the electrical power leads, and

    iv) At least one of the solenoids having a signal decoder operating a switch to control the supply of power to the solenoid, the arrangement being such that the solenoid having the signal decoder can be switched on and off via instructions given to the signal encoder.

Preferably, most or all of the solenoids is or are provided with individual signal encoders so that each solenoid can be addressed individually (or, if required, in groups) by the signal encoder.

Preferably, the signal decoder is arranged in parallel with the individual solenoid.

The solenoid spool or an attachment connected thereto may activate a position detector connected to a position signal encoder to send an encoded position signal into the leads to permit a position signal decoder to detect movement of the solenoid spool. There may be a feed back loop interconnecting the position signal decoder with the signal encoder to permit accurate control of the position of the spool valve. A plurality of position signal encoders may be provided on each solenoid.

The present invention also envisages a solenoid assembly incorporating switch means activated by a signal decoder responsive to signal codes on the power leads connectable to the solenoid.

The solenoid may also be provided with a position detector and a position signal encoder.

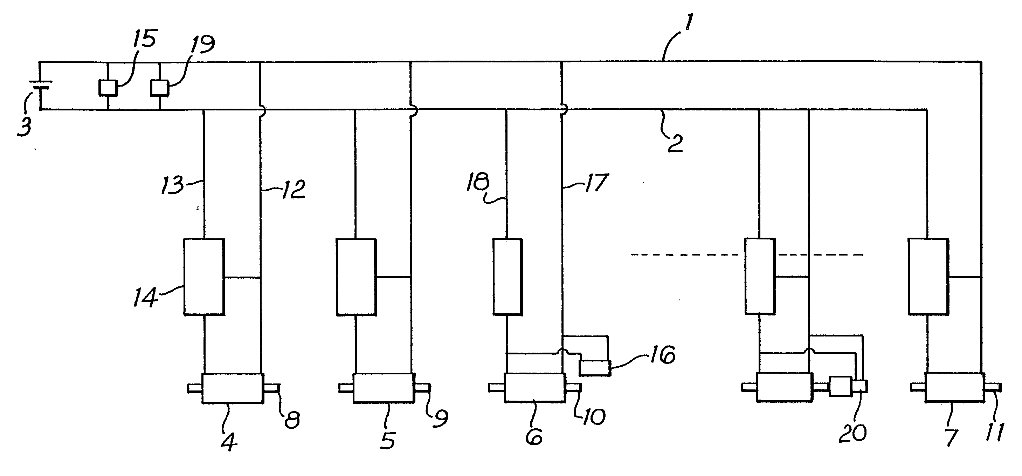

By way of example embodiments of the present invention will now be described with reference to the accompanying drawing which is a schematic diagram showing a system in accordance with the invention.

In the drawing, a pair of electrical leads 1, 2 are connected to a source of electrical power 3. The leads 1, 2 may be regarded as bus leads and carry electrical power to a plurality of solenoids indicated by 4, 5, 6 and 7. Each solenoid incorporates a moveable spool 8, 9, 10 and 11. The number of solenoids provided in a system would be determined by the user, but could be very high, for example, 128 solenoids could be provided within a system.

Each solenoid, such as solenoid 4, is connected to bus lines 1 and 2 by power leads 12, 13. A switch is provided in lead 13 indicated by block 14. The switch incorporates a signal decoder contained within the switch assembly. A signal encoder 15 superimposes onto the power lines 1, 2 a suitably encoded signal. The coding may comprise bursts of digits or may comprise a wave form. The signal would normally be applied to the power line by an induction method or by reversing the polarity of the power lines and protecting the solenoid and the electronics with a blocking diode. If required a capacitor can store current to maintain the position of the solenoid during reversal of polarity, but the signal frequency is so high compared to the response time of the solenoid that the solenoid will not be significantly affected by short periods of power loss when the signal system is in operation.

Within the decoder unit contained within switch 14, there is a decoder capable of detecting the burst of digits imposed by encoder 15 and which would be individually responsive to its own pre-programmed code. This will be an instruction for switch 14 to open or close as required. Operation of the switch 14 will result in energisation of solenoid 4 and movement of spool 8.

As shown with solenoid 6, spool 10 may move into the proximity of a position encoding mechanism 16 which would then superimpose on lead lines 17, 18 a position signal code indicating the position of spool 10 or an attachment to the spool. A position signal decoder 19 can then be used to detect the position of spool 10. If required, this can be used to feed back information via a suitable control loop to encoder 15. A plurality of position encoders may be utilised for each individual solenoid. One of the position encoders, such as 20 may be located on a valve or other device actuated by the solenoid. The solenoid and the valve may both have a position encoder.

It will be appreciated that the system of the present invention provides both power and control via a single pair of lead lines, thus considerably reducing the complexity of addressable solenoid systems. The system also permits large numbers of solenoids to be connected to a single pair of bus leads and also permits, in its refined version, detection of the position of the spools. The system designer may produce a system in which each solenoid operates individually or, if required, solenoids may be connected with the same decoder so as to operate together. The system can therefore be pre-programmed by the system designer and there is no need for the end user to incorporate a computer with a specifically written program.

The invention thus provides an immensely flexible and simple system for addressable solenoids which can be used to control very large numbers (depending solely on the ability of the encoder to have enough channels and the power lines to conduct sufficient power throughout the system uniformly).

## Claims

1. An addressable solenoid system including
i) A plurality of solenoids connected in parallel to
ii) A pair of electrical supply leads,
iii) A signal encoder adapted to superimpose at least one coded signal onto the electrical power leads, and
iv) At least one of the solenoids having a signal decoder operating a switch to control the supply of power to the solenoid,
the arrangement being such that the solenoid having the signal decoder can be switched on and off via instructions given to the signal encoder.

2. A system as claimed in Claim 1 in which the solenoid incorporates a spool having connected or attached thereto a position detector connected to a position encoder to send an encoded signal into the leads to permit a position signal decoder to detect movement of the solenoid spool.

3. A system as claimed in Claim 2 in which there is a feed back loop interconnecting the position encoder with the signal encoder to permit accurate control of the position of the spool.

4. A system as claimed in Claim 2 or 3 in which a plurality of position encoders are provided on each solenoid.

5. A system as claimed in any one of Claims 1 to 4 in which most or all of the solenoids are provided with signal encoders so that each solenoid can be individually addressed.

6. A system as claimed in Claim 1 in which the signal is encoded by inducing the signal on to the power lines or by reversing the power polarity and protecting the electronic circuit with a blocking diode.

7. A system as claimed in Claim 3 or 4 in which the position signal is induced onto the power lines.

8. An addressable solenoid including an electrical winding, a movable spool responsive to changes in magnetic field emanating from the winding, a signal decoder responsive to signal codes on the power leads connectable to the winding and switch means activated by the signal decoder to control the supply of electrical power to the winding.

9. An addressable solenoid as claimed in Claim 8 further incorporating a position detector and a position signal encoder adapted to encode a position signal onto the power leads.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | DE-A-2 433 924 (ACCUMULATORENFABRIK SONNENSCHEIN GmbH) * Page 1, paragraphs 1,2 * | 1 | H 01 F 7/18 B 60 R 16/02 |
| A | | 2-7 | |
| A | PATENT ABSTRACTS OF JAPAN, vol. 9, no. 194 (M-403)[1917], 10th August 1985; & JP-A-60 57 072 (SHIYOUKETSU KINZOKU KOGYO K.K.) 02-04-1985 * Abstract * | 1,5,8 | |
| A | FR-A-2 407 603 (VALENTIN TIKHONOVICH PETROV) * Page 9, line 2 - page 10, line 5 * | 1-4 | |
| A | FR-A-2 474 189 (S.E.I.M.A.) | | |
| A | PATENT ABSTRACTS OF JAPAN, vol. 9, no. 194 (M-403)[1917], 10th August 1985; & JP-A-60 57 074 (SHIYOUKETSU KINZOKU KOGYO K.K.) 02-04-1985 | | TECHNICAL FIELDS SEARCHED (Int. Cl.4) |
| A | PATENT ABSTRACTS OF JAPAN, vol. 9, no. 321 (E-367)[2044], 17th December 1985; & JP-A-60 154 505 (TOUHOKU OKI DENKI K.K.) 14-08-1985 | | H 01 F 7/00 H 02 G 3/00 B 60 R 16/00 |

The present search report has been drawn up for all claims

| Place of search | Date of completion of the search | Examiner |
|---|---|---|
| THE HAGUE | 13-10-1988 | VANHULLE R. |